# FASCICULE DE BREVET EUROPEEN

(11) **EP 3 708 230 B1**
(45) Date de publication et mention de la délivrance du brevet: **11.10.2023**
(21) Numéro de dépôt: 20162182.8
(22) Date de dépôt: 10.03.2020
(51) Int. Cl.: A63C 9/086, A63C 9/08, A63C 9/20, A63C 5/12, F16H 19/00, F16H 25/20, A63C 9/00

(54) **DISPOSITIF DE RETENUE POUR PLANCHE DE GLISSE**
HALTEVORRICHTUNG FÜR GLEITBRETTE
RETAINING DEVICE FOR A GLIDEBOARD

(30) Priorité: 13.03.2019 FR 1902560
(43) Date de publication de la demande: 16.09.2020
(73) Titulaire: Salomon S.A.S., 74370 Metz-Tessy (FR)
(72) Inventeur: YELOVINA, Eddy, 74330 Epagny (FR); VERTU, Landry, 74370 Saint-Martin-Bellevue (FR)
(74) Mandataire: Lapierre, Stéphane

(56) Documents cités:
- WO-A1-90/05251
- WO-A1-2012/045723
- WO-A1-2018/143815
- US-A- 1 422 000

## Description

### DOMAINE TECHNIQUE DE L'INVENTION

L'invention concerne le domaine des dispositifs de retenue d'une chaussure sur une planche de glisse. Elle concerne plus particulièrement les dispositifs de retenue qui permettent un réglage longitudinal de la position de la chaussure sur la planche de glisse. Elle trouve pour application particulièrement avantageuse le ski de fond.

### ÉTAT DE LA TECHNIQUE

Dans certains sports de glisse il est avantageux de pouvoir régler la position longitudinale d'un dispositif de retenue d'une chaussure sur une planche de glisse. Dans le cas du ski de fond par exemple, l'utilisateur souhaitera en effet modifier la position longitudinale de sa chaussure sur le ski notamment pour s'adapter aux conditions d'enneigement, améliorer ses performances ou améliorer son confort. De manière simplifiée, si l'utilisateur déplace le dispositif de retenue et donc sa chaussure vers l'avant, cela conduira à améliorer la friction et l'accroche de la planche de glisse dans la neige. Si au contraire l'utilisateur déplace le dispositif de retenue vers l'arrière de la planche de glisse, la friction sera réduite favorisant la glisse et donc la vitesse de l'utilisateur.

Plusieurs solutions ont été proposées pour permettre un réglage de la position longitudinale du dispositif de retenue sur la planche de glisse, ceci, sans avoir à retirer la chaussure de la fixation. Les documents WO2012/045723, WO2018/143815 et WO2017/095232 décrivent des solutions variées. Certaines solutions prévoient que le dispositif de retenue comporte un châssis portant un mécanisme d'accrochage d'un élément appartenant à la chaussure, le châssis portant également un organe de réglage. Lorsque l'utilisateur actionne l'organe de réglage, le châssis se déplace longitudinalement sur la planche de glisse, alors que la chaussure reste en prise avec le dispositif de retenue.

Ces solutions présentent quelques inconvénients. En particulier, l'actionnement de l'organe de réglage de certains modes de réalisation peut s'avérer complexe pour l'utilisateur. La course de déplacement longitudinal est parfois réduite du fait de la construction des mécanismes. Par ailleurs, plusieurs de ces solutions se sont avérées relativement encombrantes. L'agencement de plusieurs solutions tend à alourdir l'avant du ski au détriment de l'équilibre du ski. Du fait de leur exposition à l'environnement extérieur et en particulier au gel ou à l'accumulation de neige, leur fiabilité peut être compromise lors de la pratique en extérieur.

Un objet de la présente invention est donc de proposer un dispositif de retenue permettant de limiter, voire de supprimer, au moins l'un des inconvénients mentionnés ci-dessus.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ DE L'INVENTION

Pour atteindre cet objectif, la présente invention prévoit un dispositif de retenue d'une chaussure sur une planche de glisse, le dispositif de retenue comprenant :
- un châssis configuré pour coopérer avec une plaque d'interface solidaire de la planche de glisse ou un élément complémentaire de retenue formé directement par la planche de glisse de manière à pouvoir coulisser longitudinalement par rapport à la planche de glisse, le châssis présentant une face inférieure, destinée à être tournée au regard de la planche de glisse et s'étendant principalement selon un plan, dit plan principal,
- un mécanisme de maintien configuré pour coopérer avec un élément d'accrochage appartenant à la chaussure de sorte que la chaussure soit maintenue en position par rapport au châssis, le mécanisme de maintien étant porté par le châssis,
- un organe de réglage configuré pour coopérer avec une crémaillère solidaire de la planche de glisse de sorte que l'actionnement de l'organe de réglage entraîne le coulissement longitudinal du châssis par rapport à la planche de glisse, l'organe de réglage étant porté par le châssis.

L'organe de réglage comprend une portion de coopération montée en rotation autour d'un axe de rotation inclinée d'un angle α compris entre 30° et 90° par rapport audit plan principal (XY) dans lequel s'étend principalement la face inférieure du châssis, la portion de coopération comprenant une face inférieure portant au moins un premier relief. L'au moins un premier relief présente au moins deux flancs latéraux s'étendant respectivement selon une trajectoire courbe conformée de sorte que la distance entre un point de l'une de ces trajectoires et ledit axe de rotation varie progressivement tout le long d'au moins une partie de la trajectoire courbe. Le premier relief est configuré de sorte que ses flancs latéraux soient aptes à coopérer avec des surfaces de contact de reliefs complémentaires de la crémaillère de manière à entraîner le coulissement longitudinal du châssis par rapport à la planche de glisse sous l'effet de la rotation de la portion de coopération autour dudit axe.

Cette solution présente de nombreux avantages.

Notamment, l'organe de commande est aisément accessible. Cela permet à l'utilisateur de régler la position longitudinale de sa chaussure de manière aisée et rapide, conduisant de ce fait à des performances sportives et un confort améliorés.

Par ailleurs, cette construction permet une intégration particulièrement compacte de l'organe de réglage dans la fixation. Cela permet notamment un bon équilibrage de la planche de glisse. En effet, le poids du mécanisme de réglage peut être localisé près du mécanisme de maintien de la chaussure. Dans de nombreuses solutions existantes, le mécanisme de réglage est positionné vers l'avant de la planche de glisse et à une distance variable du mécanisme de maintien de la chaussure, ce qui tend à déséquilibrer la planche de glisse.

Grâce à cette compacité, l'organe de réglage est peu exposé. Cela conduit à réduire les risques de manipulation involontaire par des éléments extérieurs qui peuvent interférer avec le dispositif de retenue lors de la glisse. De tels éléments extérieurs peuvent par exemple être une autre planche de glisse, typiquement l'autre ski de l'utilisateur, des racines, des filets de sécurité etc.

De plus, cette construction permet de protéger la portion de coopération de l'organe de réglage de l'environnement extérieur (neige, gel).

La solution permet un réglage de la position longitudinale de la chaussure alors que cette dernière reste en prise avec le mécanisme de maintien.

En outre, cette solution permet de régler la position longitudinale de la chaussure sur une grande longueur de course. L'invention offre ainsi une amplitude de réglage améliorée par rapport à des solutions dans lesquelles une crémaillère à dents droites serait engrainée par un pignon en rotation selon un axe horizontal et transversal à celui de la planche de glisse.

L'invention propose un dispositif de retenue adaptable à une multitude de planches de glisse nécessitant peu d'éléments d'interfaçage avec le dispositif de retenue. En effet, le dispositif de retenue peut se monter directement sur la planche de glisse ou sur une seule pièce intercalaire, une plaque d'interface, solidaire de la planche de glisse.

En fonction des conditions d'enneigement par exemple ou du style de glisse qu'il souhaite mettre en oeuvre, un utilisateur peut préférer une paire de skis plutôt qu'une autre. Grâce à l'invention, il peut aisément retirer le dispositif de retenue d'une première paire de ski pour l'utiliser sur une deuxième paire de ski en ne manipulant que très peu de pièce : le dispositif de retenue et la planche de glisse, équipée ou non d'une plaque d'interface. Cela est rendu possible par le fait que l'organe de réglage permettant de modifier la position longitudinale de la chaussure est porté, de préférence entièrement, par le dispositif de retenue de cette dernière.

Selon un premier mode de réalisation, la crémaillère est formée par une face supérieure de la planche de glisse elle-même. Selon un deuxième mode de réalisation, la crémaillère est formée par une plaque interface qui est rapportée sur une face supérieure de la planche de glisse. Ce deuxième mode de réalisation permet d'adapter très aisément une planche de glisse pour qu'elle devienne compatible avec le dispositif de retenue selon l'invention.

De manière facultative, l'invention peut en outre présenter au moins l'une quelconque des caractéristiques suivantes :
Selon un exemple, l'axe de rotation est inclus dans un plan longitudinal médian du châssis.

Selon un exemple, la portion de coopération comprend au moins un deuxième relief présentant deux flancs latéraux s'étendant respectivement selon une trajectoire courbe conformée de sorte que la distance entre un point de l'une des trajectoires des flancs latéraux du deuxième relief et ledit axe de rotation varie progressivement tout le long d'au moins une partie de cette trajectoire courbe. Les deux flancs latéraux du deuxième relief sont décalés angulairement par rapport aux flancs latéraux du premier relief.

Cela permet de renforcer la robustesse du mécanisme de réglage tout en limitant l'encombrement. En effet, les forces de contact et la friction se répartissent sur deux reliefs tels que des nervures, et donc sur une surface plus importante, tout en limitant l'encombrement par rapport à une solution comprenant un unique relief, telle qu'une spirale, qui s'étendrait sur un angle supérieur à 360°.

Selon un exemple, l'organe de réglage est configuré de sorte que la portion de coopération peut être positionnée angulairement, autour dudit axe de rotation de la portion de coopération, selon au moins deux configurations parmi lesquelles :
- une configuration de glisse pour laquelle au moins le premier et le deuxième reliefs sont aptes à être simultanément en prise avec au moins l'un des reliefs complémentaires de la crémaillère et une configuration de réglage transitoire pour laquelle seulement certains et de préférence l'un seulement parmi les au moins deux reliefs sont aptes à être en prise avec au moins l'un des reliefs complémentaires de la crémaillère et
- une configuration de réglage transitoire pour laquelle seulement l'un des deux reliefs est apte à être en prise avec au moins un relief complémentaire de la crémaillère.

Cela permet de renforcer la robustesse en configuration de glisse tout en limitant l'encombrement du mécanisme de réglage. L'équilibrage de la planche de glisse en est amélioré.

Selon un exemple, le relief présente une forme courbe, telle qu'une portion de spirale, qui s'étend selon un angle supérieur à 180°.

Selon un exemple, le relief présente une forme courbe, telle qu'une portion de spirale, qui s'étend selon un angle inférieur à 360°. Cela permet de limiter l'encombrement du mécanisme de réglage. L'équilibrage de la planche de glisse en est amélioré.

Selon un exemple, l'organe de réglage comprend au moins un élément d'indexation apte à coopérer avec un élément d'indexation complémentaire solidaire du châssis de manière à maintenir la portion de coopération dans au moins une position angulaire stable.

Le réglage de la position longitudinale de la chaussure est ainsi rendu plus intuitif, rapide et aisé. Cela conduit à améliorer les performances du skieur. Par ailleurs, cela permet de réduire, voire d'éviter les risques de manipulation involontaire de l'organe de réglage.

Selon un exemple, l'au moins une position angulaire stable correspond à la configuration de glisse.

Selon un exemple, la portion de coopération est dimensionnée et agencée de sorte que lorsqu'une première portion du premier relief est apte à être en prise avec au moins un relief complémentaire de la crémaillère, une deuxième portion du premier relief, disposée en opposition par rapport à l'axe de rotation, n'est plus apte à coopérer avec au moins un relief complémentaire de la crémaillère.

Cela permet de réduire encore l'encombrement tout en offrant une grande plage de réglage.

Selon un exemple, la face inférieure de la portion de coopération est conique.

Selon un exemple, l'organe de réglage comprend un organe de commande configuré pour être manipulé par l'utilisateur afin d'entraîner en rotation la portion de coopération autour de l'axe de rotation.

Selon un exemple, le châssis présente une partie supérieure et un logement inférieur destiné à être tourné au regard de la crémaillère, la portion de coopération étant logée dans ledit logement inférieur.

Le dispositif de retenue comprend un organe de commande configuré pour être manipulé par l'utilisateur afin d'entraîner en rotation la portion de coopération autour de l'axe de rotation. L'organe de commande est positionné au-dessus de la partie supérieure du châssis pour être accessible manuellement par l'utilisateur.

Le fait que la portion de coopération soit logée à l'intérieur du logement défini par le châssis protège cette dernière des chocs et des intempéries. En particulier, cela permet d'éviter que le gel ou l'accumulation de neige vienne bloquer la coopération des reliefs tels que des nervures avec la crémaillère.

Selon un exemple, le mécanisme de maintien comprend un levier d'actionnement articulé en rotation sur le châssis, définissant un contour, le levier étant manipulable par l'utilisateur entre une configuration de rétention pour laquelle le mécanisme de maintien retient la chaussure et une configuration de libération pour laquelle le mécanisme de maintien autorise la libération de la chaussure par rapport au dispositif de retenue, l'organe de commande étant dimensionné et agencé de sorte à être situé au-dessus du levier lorsque celui-ci est dans la configuration de rétention et de sorte à pouvoir passer au travers dudit contour lors du passage de la configuration de rétention à la configuration de libération.

Selon un exemple, l'organe de commande est conformé de sorte que :
- dans la configuration de glisse il autorise le passage alternatif du levier entre les configurations de rétention et de libération,
- dans la configuration de réglage transitoire il bloque le passage alternatif du levier entre les configurations de rétention et de libération,
- lorsque le levier est en configuration de rétention, l'organe de commande peut être librement manipulé pour passer de la configuration de glisse à la configuration de réglage transitoire.

Ceci permet de régler la position longitudinale de la chaussure lorsque cette dernière est accrochée sur la planche de glisse, sans risque que cette manipulation entraîne de manière involontaire un mouvement du levier et libère la chaussure. En pratique, cela représente un avantage considérable en termes de rapidité et de sécurité du réglage. L'utilisateur peut ainsi exécuter un réglage longitudinal de manière très rapide, voire alors qu'il est toujours en phase de glisse à vitesse mesurée. Cela permet donc d'améliorer significativement les performances sportives de l'utilisateur.

Selon un exemple, le levier d'actionnement présente au moins deux branches s'étendant principalement longitudinalement. Ce mode de réalisation permet également de protéger le mécanisme de réglage contre les chocs.

Selon un exemple, ledit plan principal dans lequel s'étend principalement la face inférieure du châssis correspond à un plan parallèle au plan de glisse de la planche de glisse. Typiquement lorsque la planche de glisse est posée à plat sur une surface horizontale et que le skieur exerce son poids sur la partie médiane du ski via la fixation, le plan principal est sensiblement horizontal.

Selon un exemple, la portion de coopération forme un disque.

Selon un exemple, le mécanisme de maintien comprend une mâchoire mobile entre une position d'enclenchement pour laquelle la mâchoire mobile est apte à coopérer avec l'élément d'accrochage de sorte à permettre la solidarisation de l'élément d'accrochage avec le dispositif de retenue tout en permettant la rotation de la chaussure autour d'un axe transversal au dispositif de retenue, et une position de libération pour laquelle la mâchoire mobile est dans une configuration permettant la désolidarisation de l'élément d'accrochage avec le dispositif de retenue. Un organe d'actionnement tel qu'un levier commande un déplacement de la mâchoire mobile pour la faire basculer de la position d'enclenchement vers la position de libération.

Un autre aspect de la présente invention concerne une plaque d'interface, s'étendant principalement selon un axe longitudinal, et comprenant une crémaillère présentant des reliefs complémentaires répartis parallèlement audit axe longitudinal de la plaque interface. Chaque relief complémentaire présente au moins deux surfaces de contact courbes et configurée pour coopérer avec des surfaces de contact portées par au moins un premier relief porté par une portion de coopération d'un châssis de dispositif de retenue pour chaussure de glisse. L'au moins un premier relief présente au moins deux flancs latéraux s'étendant respectivement selon une trajectoire courbe conformée de sorte que la distance entre un point de l'une de ces trajectoires et un axe de rotation autour duquel est montée en rotation la portion de coopération varie progressivement tout le long d'au moins une partie de la trajectoire courbe, de sorte que la rotation de la portion de coopération autour de son axe de rotation entraîne le coulissement longitudinal du châssis le long dudit axe longitudinal de la plaque interface.

Un autre aspect de la présente invention concerne une plaque d'interface apte à se fixer sur une planche de glisse, et comprenant au moins une crémaillère configurée pour coopérer avec l'organe de réglage d'un dispositif de retenue selon l'invention.

Selon un exemple, la plaque d'interface s'étend principalement selon un axe longitudinal, la crémaillère présentant des reliefs dont une surface au moins est courbe. Autrement dit, ces reliefs complémentaires comprennent au moins une surface de contact courbe.

Selon un exemple, la plaque d'interface s'étend principalement selon un axe longitudinal, la crémaillère présentant des reliefs dont l'alignement est décentré par rapport audit axe longitudinal de la plaque interface. Ceci présente pour avantage de faciliter le déplacement longitudinal avec l'organe de réglage décrit ci-dessus.

Selon un exemple, la plaque d'interface comprend des reliefs complémentaires portés par la crémaillère, les reliefs complémentaires présentant une forme asymétrique par rapport à l'axe longitudinal de la plaque d'interface.

Ainsi, la crémaillère est ménagée sur l'un parmi la planche de glisse et sur une plaque interface. Selon ce mode de réalisation, la plaque interface peut-être collée ou vissée sur la planche de glisse.

Selon un exemple, l'élément complémentaire de retenue est formé par l'un parmi : la planche de glisse et une plaque d'interface solidaire de la planche de glisse.

Selon un exemple, la crémaillère est portée par l'élément complémentaire de retenue.

Un autre aspect de la présente invention concerne un ensemble comprenant un dispositif de retenue selon l'invention et une plaque d'interface selon l'invention.

Un autre aspect de la présente invention concerne une planche de glisse équipée d'un dispositif de retenue selon l'invention.

Selon un exemple la planche de glisse comprend une crémaillère formée par une face de la planche de glisse. Alternativement la planche de glisse comprend une plaque interface, rapportée sur une face de la planche de glisse et formant au moins l'un parmi la crémaillère et l'élément complémentaire de retenue.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
[Fig. 1] est une vue en perspective d'un exemple de dispositif de retenue selon un exemple de réalisation de la présente invention.
[Fig. 2] est une vue éclatée du dispositif de retenue illustré en figure 1.
[Fig. 3] est une vue en coupe longitudinale du dispositif de retenue illustré en figure 1.
[Fig. 4] est une vue du dessus d'une planche de glisse équipée d'une plaque d'interface selon un mode de réalisation.
[Fig. 5] est une vue en perspective de la planche de glisse et de la plaque d'interface illustrées en figure 4.
[Fig. 6] est une vue du dessous du dispositif de retenue illustré en figure 1.
[Fig. 7] est une vue du dessous d'une portion de coopération faisant partie du mécanisme de réglage du dispositif de retenue illustré en figure 1.
[Fig. 8] est une vue du dessus d'une plaque d'interface portant un exemple de crémaillère.
[Fig. 9] est une vue du dessus d'une plaque d'interface portant un autre exemple de crémaillère.
[Fig. 10] est une vue du dessus d'une plaque d'interface portant encore un autre exemple de crémaillère.
[Fig. 11] est une vue du dessous d'une portion de coopération selon un mode de réalisation alternatif à celui illustré en figure 7.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

De manière classique, dans le cadre de la présente invention, le terme crémaillère désigne un dispositif mécanique présentant des reliefs complémentaires aptes à coopérer avec des reliefs d'une pièce d'entraînement de sorte que, lorsque la pièce d'entraînement est manipulée, cette coopération provoque la translation de la pièce d'entraînement. Ces reliefs complémentaires ou crans sont répartis de manière sensiblement linéaire.

Il est précisé que dans le cadre de la présente invention, le terme « sur », « surmonte » ou « sous-jacent » ou leurs équivalents ne signifient pas obligatoirement « au contact de ». Ainsi par exemple, si une première pièce est disposée sur une deuxième pièce, cela ne signifie pas obligatoirement que les deux pièces sont directement au contact l'une de l'autre mais cela signifie que la première pièce recouvre au moins partiellement la deuxième pièce en étant soit directement à son contact soit en étant séparée d'elle par une autre pièce ou un autre élément.

Dans la présente demande de brevet, le terme « solidaire » utilisé pour qualifier la liaison entre deux pièces signifie que les deux pièces sont liées/fixées l'une par rapport à l'autre, selon tous les degrés de liberté sauf s'il est explicitement spécifié différemment. Par exemple, s'il est indiqué que deux pièces sont solidaires en translation selon une direction X, cela signifie que les pièces peuvent être mobiles, possiblement selon plusieurs degrés de liberté, à l'exclusion de la liberté en translation selon la direction X. Autrement dit, si on déplace une pièce selon la direction X, l'autre pièce effectue le même déplacement.

Les principaux objectifs de l'invention sont la compacité de la fixation et son allégement, principalement pour une pratique de ski de fond ou de randonnée. L'invention permet ainsi de tirer pleinement partie de la performance intrinsèque de la planche de glisse en ayant une très bonne répartition des masses. Il importe d'éviter un centre de gravité positionné trop vers l'avant, notamment devant l'axe de rotation de la chaussure par rapport à la planche de ski. En effet, si tel est le cas, on augmente le risque de planter la spatule avant de la planche de ski dans la neige lors des mouvements de propulsion. Ainsi, ramener la position longitudinale du centre de gravité de la fixation vers la position de l'axe de rotation de la chaussure par rapport à l'engin de glisse ou légèrement à l'arrière de cette position d'axe de rotation, contribue à un meilleur équilibre du ski équipé et donc améliore sensiblement la pratique.

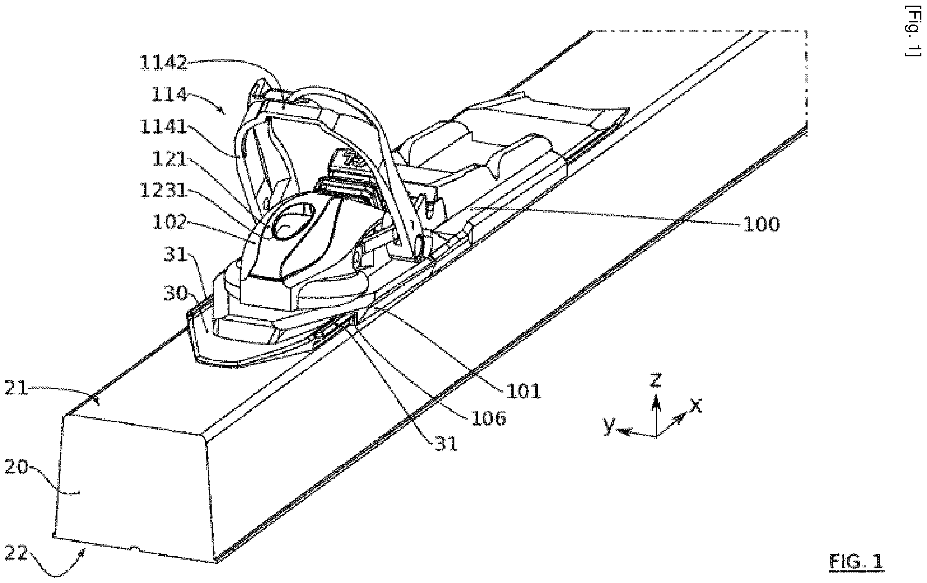

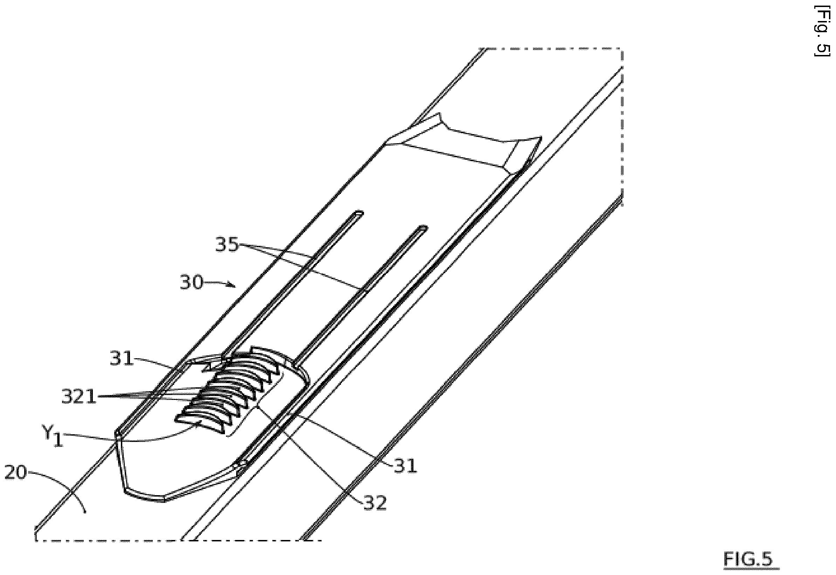

En référence aux figures 1 à 7, un exemple non limitatif de la présente invention va maintenant être décrit en détail.

La figure 1 notamment illustre une planche de glisse 20 équipée d'un dispositif de retenue 10, habituellement désignée par le terme « fixation », pour une chaussure de glisse (non illustrée sur les figures).

La planche de glisse 20 présente une face supérieure 21 tournée au regard du dispositif de retenue 10 et une face inférieure 22 destinée à venir au contact du substrat, typiquement de la neige. La face inférieure 22 définit ainsi une surface et un plan de glisse. Le plan de glisse correspond au plan XY du repère orthogonal XYZ illustré en figure 1.

De manière parfaitement connue, le dispositif de retenue 10 comprend un châssis 100 portant un mécanisme de maintien 110 pour chaussure de glisse. Le mécanisme de maintien 110 permet sélectivement de mettre en prise la chaussure avec le dispositif de retenue 10 ou de libérer la chaussure du dispositif de retenue 10. Lorsque la chaussure est en prise avec le mécanisme de maintien 110, la chaussure peut être entièrement fixe par rapport au dispositif de retenue 10. Tel est par exemple le cas du ski alpin. Selon d'autres pratiques, par exemple en ski de fond ou en ski de randonnée, le mécanisme de maintien 110 permet à la chaussure de conserver un ou plusieurs degrés de liberté. Généralement, la chaussure est articulée en rotation sur le dispositif de retenue 10 autour d'un axe horizontal transverse à la direction de glisse, au niveau des orteils.

L'exemple illustré en figure 1 s'applique, par exemple, au ski de fond. La chaussure comprend alors un élément d'accrochage, typiquement un arbre s'étendant selon une direction sensiblement transversale Y à la direction longitudinale principale X de la planche de glisse, lorsque la chaussure est en prise avec le mécanisme de maintien. L'élément d'accrochage est intégré dans un évidement de l'avant de la semelle de la chaussure. En pratique, la chaussure peut, par exemple, être conforme à l'enseignement technique des demandes EP-A-0 913 102 et/ou EP-A-0 913 103 auxquelles on peut se référer pour plus de détails.

Pour assurer la solidarisation de la chaussure avec le dispositif de retenue 10, le mécanisme de maintien 110 comprend une mâchoire fixe 112, une mâchoire mobile 113, un organe d'actionnement 114 et un dispositif de transformation de mouvement 115.

La mâchoire mobile 113 comprend, par exemple, un crochet 1131 qui permet de venir fermer un logement 111 défini par la mâchoire fixe 112 et à l'intérieur duquel s'insère l'élément d'accrochage de la chaussure. Selon un mode de réalisation, la mâchoire fixe est réalisée par une partie du châssis. La mâchoire 113 est mobile entre :
- une position d'enclenchement pour laquelle elle est apte à coopérer avec l'élément d'accrochage de sorte à permettre la solidarisation de l'élément d'accrochage avec le dispositif de retenue 10 tout en permettant la rotation de la chaussure autour d'un axe transversal Y au dispositif de retenue 10, et
- une position de libération pour laquelle elle est dans une configuration permettant la désolidarisation de l'élément d'accrochage avec le dispositif de retenue 10.

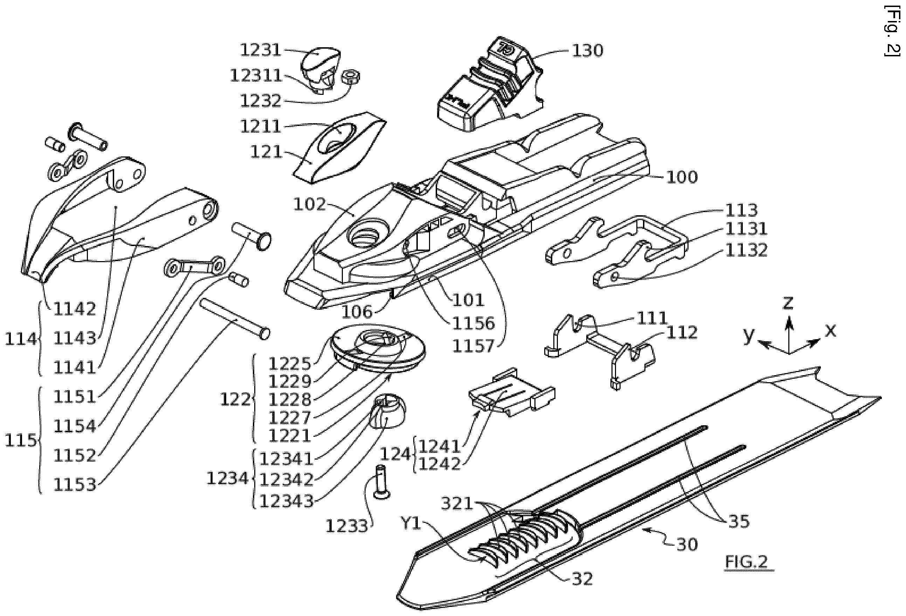

L'organe d'actionnement 114, tel qu'un levier, commande un déplacement de la mâchoire mobile 113 pour la faire sélectivement passer de la position d'enclenchement vers la position de libération et inversement. La transmission du mouvement entre l'organe d'actionnement 114 et la mâchoire mobile 113 est assurée par le dispositif de transformation de mouvement 115. Des éléments de ce dispositif de transformation de mouvement 115 sont illustrés en figure 2. Ils comprennent, dans cet exemple, des bielles 1151, des goupilles 1152 reliant une première extrémité de bielles 1151 avec l'organe d'actionnement 114, une goupille 1153 reliant une deuxième extrémité de bielles 1151 avec le châssis 100 et des goupilles 1154 reliant l'organe d'actionnement 114 avec la mâchoire mobile 113. La figure 2 rend également visible les aménagements réalisés sur le châssis 100, à savoir, un trou traversant 1156 pour le passage de la goupille 1153 et des trous oblongs 1157 pour le passage de la goupille 1154. De même, la mâchoire mobile comprend des trous 1132 pour le passage d'une goupille 1154.

Pour plus de détails sur un exemple de fonctionnement du mécanisme de maintien 110, on pourra se référer aux documents FR-A-2638974 et FR-A-2899121 présentant des mécanismes dont le fonctionnement est similaire.

Sur l'exemple illustré, on notera que le dispositif de retenue 10 comporte également une pièce élastique 130 contre laquelle l'avant de la chaussure de glisse est destiné à entrer au contact. Cette pièce élastique 130 est habituellement qualifiée de « flexor ».

Un mécanisme de réglage 120, porté en partie par le châssis 100, permet de déplacer longitudinalement le châssis 100 par rapport à la planche de glisse 20. A cet effet, le mécanisme de réglage 120 comporte une crémaillère 32 solidaire de la planche de glisse 20 et un organe de réglage 1200 configuré pour coopérer avec la crémaillère 32. Dans cet exemple, et comme nous le verrons par la suite, l'organe de réglage 1200 comprend un organe de commande 121, une portion de coopération 122 et, éventuellement, un dispositif de transmission de mouvement 123. Lorsque l'organe de réglage 1200 est actionné, il entraîne le coulissement longitudinal du châssis 100 par rapport à la planche de glisse 20. La chaussure étant retenue par le mécanisme de maintien 110 porté par le châssis 100, elle se trouve également entraînée en translation et l'utilisateur peut régler sa position longitudinale par rapport à la planche de glisse.

Les éléments permettant le guidage du châssis 100 par rapport à la planche de glisse 20 apparaissent plus distinctement sur les figures 1, 2, 4, 5 et 6. Sur l'exemple illustré, le châssis 100 présente un axe longitudinal médian, parallèle à la direction X, et comporte deux profils, situés de part et d'autre de cet axe longitudinal médian. Chacun de ces profils forment une rainure longitudinale débouchante 106, transversalement, en direction de l'axe longitudinal médian. Ces deux rainures, se faisant face, sont destinées à recevoir respectivement un rail 31 de guidage porté par un élément complémentaire de retenue solidaire de la planche de glisse 20. Ces rainures forment chacune un coulisseau 101. Chacun de ces coulisseaux 101 est ainsi guidé en translation par le rail 31. De manière avantageuse, la complémentarité du châssis 100 et de l'élément complémentaire de retenue, plus particulièrement la complémentarité des coulisseaux 101 et des rails 31, en plus d'assurer une fonction de guidage en translation, empêche un éloignement du châssis 100 par rapport à la planche de glisse 20 selon la direction Z. Ainsi, la liaison cinématique formée par chaque coulisseau 101 et son rail 31 complémentaire est une liaison glissière, c'est-à-dire une liaison avec un seul degré de liberté correspondant au coulissement du châssis 100 selon la direction X.

Sur l'exemple de réalisation illustré, les rails 31 de l'élément complémentaire de retenue sont portés par une plaque d'interface 30 solidaire de la planche de glisse 20. La plaque d'interface 30 est rapportée sur la planche de glisse 20. De préférence, une face inférieure 38 de la plaque d'interface 30 est placée directement au contact de la face supérieure 21 de la planche de glisse 20. La plaque d'interface 30 est par exemple collée ou vissée sur la planche de glisse 20.

Selon un exemple de réalisation alternatif non illustré, la planche de glisse 20 forme les rails 31 de guidage et de retenue. Ainsi l'élément complémentaire de retenue portant les rails 31 est formé directement par la planche de glisse 20.

Du fait du besoin d'un guidage en translation du châssis 100 sur une course relativement importante, il est nécessaire d'introduire un jeu de fonctionnement pour que le châssis 100 puisse facilement coulisser le long de la planche de glisse 20 ou d'une pièce intermédiaire, telle qu'une plaque d'interface 30, fixée sur la planche de glisse 20.

Le système de guidage précédent assure un bon guidage vertical (Z) mais présente un guidage transversal (Y) avec un peu de débattement. Pour réduire ce jeu latéral, on peut prévoir d'autres moyens de guidage.

Ainsi, de manière avantageuse, le châssis 100 peut présenter une face inférieure 103 munie de coulisseaux additionnels 104. Ces coulisseaux additionnels 104 sont conformés pour coopérer avec des rainures complémentaires 35 solidaires de la planche de glisse 20. Sur l'exemple illustré, ces rainures complémentaires 35 sont portées par la plaque d'interface 30. Selon une variante, ces rainures complémentaires 35 peuvent être formées directement par la planche de glisse 20. Sur l'exemple illustré, ces rainures complémentaires 35 s'étendent selon une direction parallèle à l'axe X.

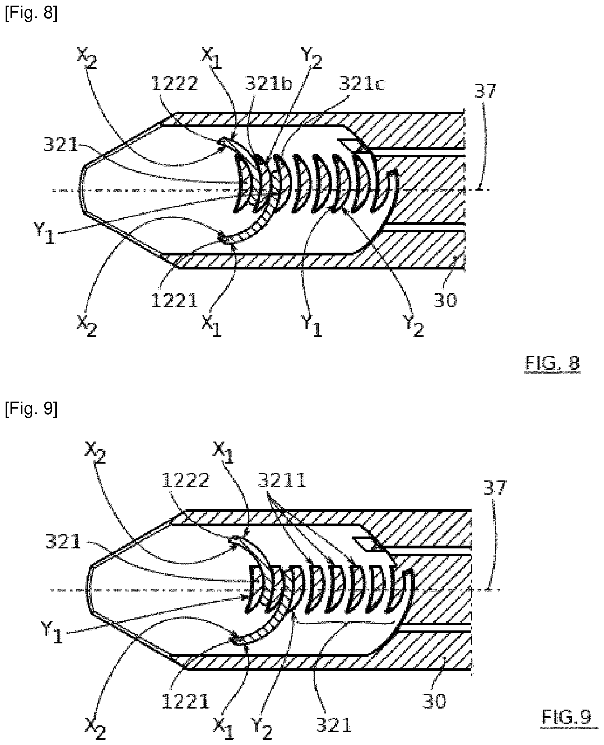

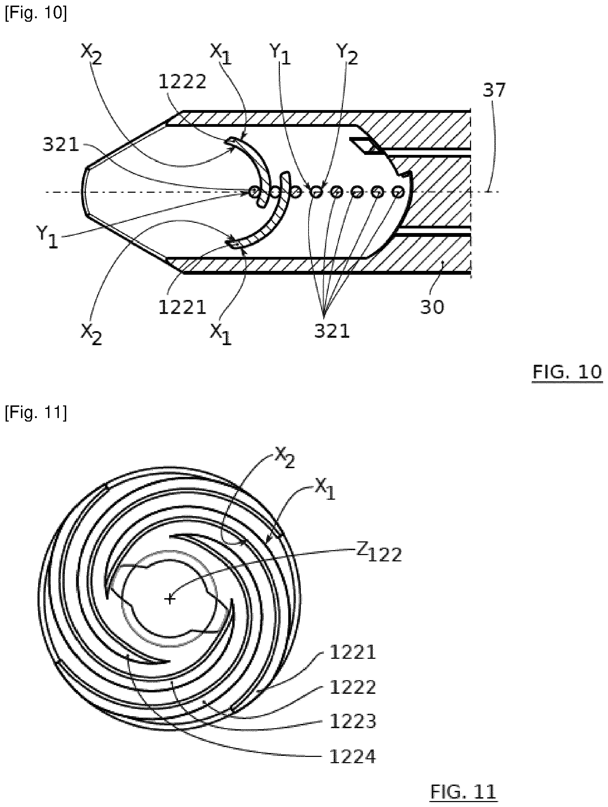

La crémaillère 32 du mécanisme de réglage apparaît plus distinctement sur les figures 2, 3, 4, et 5. La crémaillère 32 présente plusieurs reliefs complémentaires 321. Comme cela sera décrit en détail par la suite, ces reliefs complémentaires 321 présentent chacun au moins une surface de contact Y1, Y2 courbe apte à coopérer avec au moins un flanc latéral X1, X2 d'un relief 1221, 1222 entraîné par l'organe de réglage 1200. Sur l'exemple illustré dans les figures 2, 3, 4, et 5, chaque relief complémentaire 321 est délimité par deux surfaces de contact courbes dont les bords se rejoignent. Chaque relief complémentaire 321 présente une forme de portion de lune. D'autres formes de reliefs complémentaires sont parfaitement envisageables. Par exemple, et de manière non limitative, les reliefs complémentaires 321 peuvent former des portions de lunes tronquées, ou des plots, comme cela sera décrit en référence aux figures 9 et 10.

Par la suite, lorsqu'on évoque la coopération entre un relief 1221, 1222 et un relief complémentaire 321 ou qu'un relief 1221, 1222 est en prise avec la crémaillère 32, on fera référence à la coopération entre, au moins, un flanc latéral X1, X2 d'un relief 1221, 1222 et une surface de contact Y1, Y2 d'un relief complémentaire 321.

L'organe de réglage 1200 du mécanisme de réglage 120 apparaît plus distinctement sur les figures 2, 3, 6 et 7. L'organe de réglage 1200 comprend une portion de coopération 122, présentant par exemple une forme de disque et portant au moins un relief 1221, 1222.

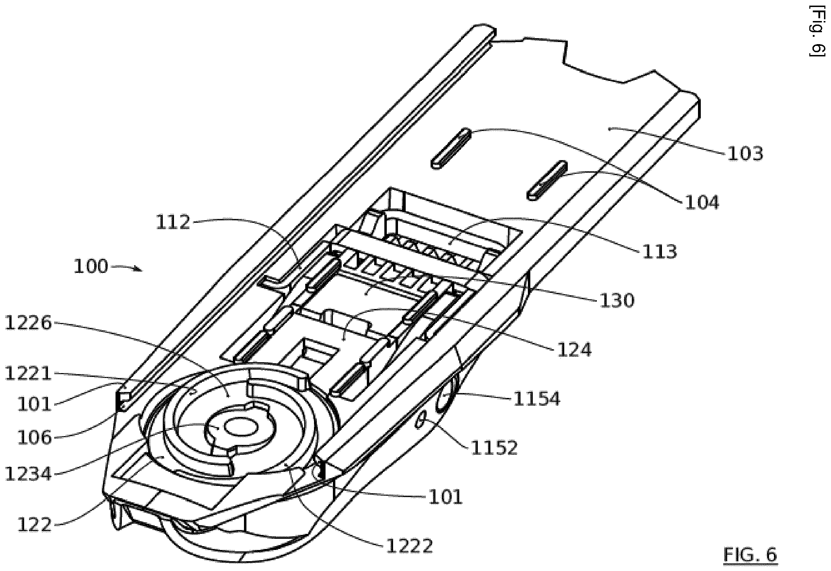

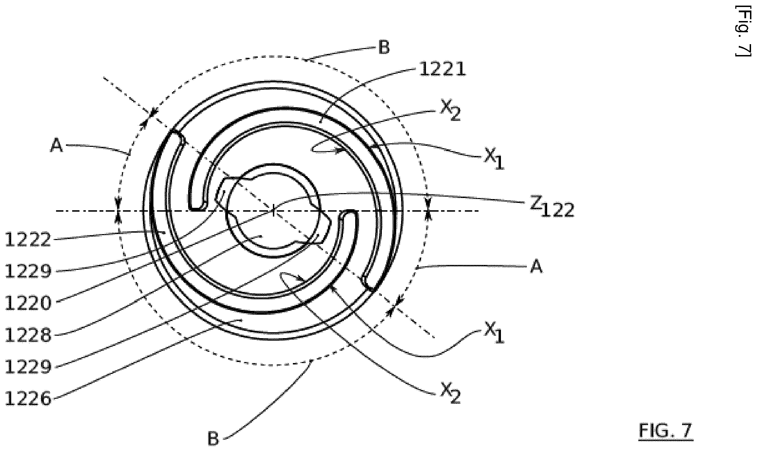

Sur l'exemple illustré, la portion de coopération 122 présente une face inférieure 1226 portant deux reliefs 1221, 1222. Ce nombre de reliefs n'est pas limitatif. Ces deux reliefs 1221, 1222 apparaissent en figure 6 et 7.

Le mécanisme de réglage 120 est conformé de sorte que l'actionnement de l'organe de réglage 1200 provoque la rotation de la portion de coopération 122 autour d'un axe de rotation z122.

La ou les reliefs 1221, 1222 portés par la portion de coopération 122 présentent deux flancs latéraux X1, X2 s'étendant respectivement selon une trajectoire courbe conformée de sorte que la distance entre un point de l'une de ces trajectoires et ledit axe de rotation z122 de la portion de coopération 122 varie progressivement lorsque l'on parcourt une partie de la trajectoire courbe.

Ainsi, si l'on considère un rayon donné issu du centre z122, lorsque la portion de coopération 122 est tournée dans un premier sens la distance entre ce centre z122 et un flanc latéral X1, X2 augmente. Lorsque la portion de coopération 122 est tournée dans un deuxième sens opposé au premier sens cette distance diminue.

Les flancs latéraux X1, X2 sont conformés pour coopérer avec les surfaces de contact Y1, Y2 des reliefs complémentaires 321 portés par la crémaillère 32 de manière à entraîner le coulissement longitudinal du châssis 100 par rapport à la planche de glisse 20 sous l'effet de la rotation de la portion de coopération 122 autour dudit axe de rotation z122.

Selon un exemple de réalisation, le ou les reliefs 1221, 1222 portés par la portion de coopération 122 forment chacun une saillie, typiquement sur la face inférieure 1226 de la portion de coopération 122. Chaque relief 1221, 1222 forme une nervure. C'est ce mode de réalisation qui est illustré sur les figures. Selon un exemple alternatif, ces reliefs sont en creux. La description qui suit décrit le mode de réalisation illustré présentant des nervures. Néanmoins, chaque caractéristiques et avantages mentionnés ci-dessus sont parfaitement applicables aux modes de réalisation avec des reliefs en creux.

Selon un exemple de réalisation, le ou les reliefs 1221, 1222 portés par la portion de coopération 122, qu'ils soient en creux ou en relief, peuvent former chacun une portion de spirale. En conséquence, les flancs latéraux X1, X2 peuvent aussi former chacun une portion de spirale.

Dans le cadre de la présente invention, on qualifie de spirale ou de portion de spirale une courbe qui évolue autour d'un axe en s'éloignant de ce dernier. Sur la figure 7, cet axe correspond à l'axe de rotation z122 de la portion de coopération 122 et passe par le centre 1220 de la spirale. De préférence, la spirale présente un pas constant. On qualifie de pas de spirale, la distance radiale parcourue sur la courbe pour un angle donné de rotation de cette dernière, typiquement pour un tour complet. La figure 7 illustre un mode de réalisation dans lequel la nervure présente un pas constant.

L'axe de rotation z122 de la portion de coopération 122 est incliné d'un angle α par rapport au plan principal dans lequel s'étend la face inférieure 103 du châssis 100. Ce plan est sensiblement parallèle au plan XY et au plan de glisse de la planche glisse 20. L'angle α est compris entre 30° et 90°.

De préférence, l'axe de rotation z122 est inclus dans un plan longitudinal médian du châssis 100, ce plan longitudinal médian étant parallèle au plan ZX.

L'organe de réglage 1200 comporte un organe de commande 121, manipulable par l'utilisateur pour entraîner en rotation la portion de coopération 122 autour de son axe z122.

Dans l'exemple illustré, c'est une rotation de l'organe de commande 121 qui entraîne la rotation de la portion de coopération 122 autour de son axe z122. L'organe de commande 121 peut être fixe par rapport à la portion de coopération 122, c'est-à-dire qu'il ne présente aucun degré de liberté par rapport à cette dernière. Dans le mode de réalisation non limitatif et illustré sur les figures, l'organe de commande 121 entraîne la portion de coopération 122 en rotation par l'intermédiaire d'un dispositif 123 de transmission de mouvements qui sera décrit plus en détail par la suite.

Lorsque l'organe de commande 121 est entraîné en rotation, il entraîne en rotation la portion de coopération 122 autour de l'axe z122. L'au moins un relief 1221, 1222 de la portion de coopération 122, par exemple formant chacun une portion de spirale, coopère ou engraine avec les reliefs complémentaires 321 de la crémaillère 32 ce qui provoque le coulissement du châssis 100.

Sur l'exemple illustré, la portion de coopération 122 comporte deux reliefs 1221, 1222, ici deux nervures. Chacun de ces reliefs forme une portion de spirale centrée sur l'axe de rotation z122. De préférence ces deux portions de spirale présentent le même pas. Ces deux portions de spirale sont décalées angulairement. Ainsi, pour un angle donné leur position radiale est différente.

Autrement dit, dans ce mode de réalisation, chacun de ces deux reliefs 1221, 1222 de la portion de coopération 122 présente deux flancs latéraux X1, X2 s'étendant respectivement selon une trajectoire courbe conformée de sorte que la distance entre un point de l'une des trajectoires des flancs latéraux X1, X2 d'un relief 1221, 1222 et ledit axe de rotation z122 varie progressivement tout le long d'au moins une partie de cette trajectoire courbe. Ici, les deux flancs latéraux du deuxième relief 1222 sont décalés angulairement par rapport aux flancs latéraux du premier relief 1221.

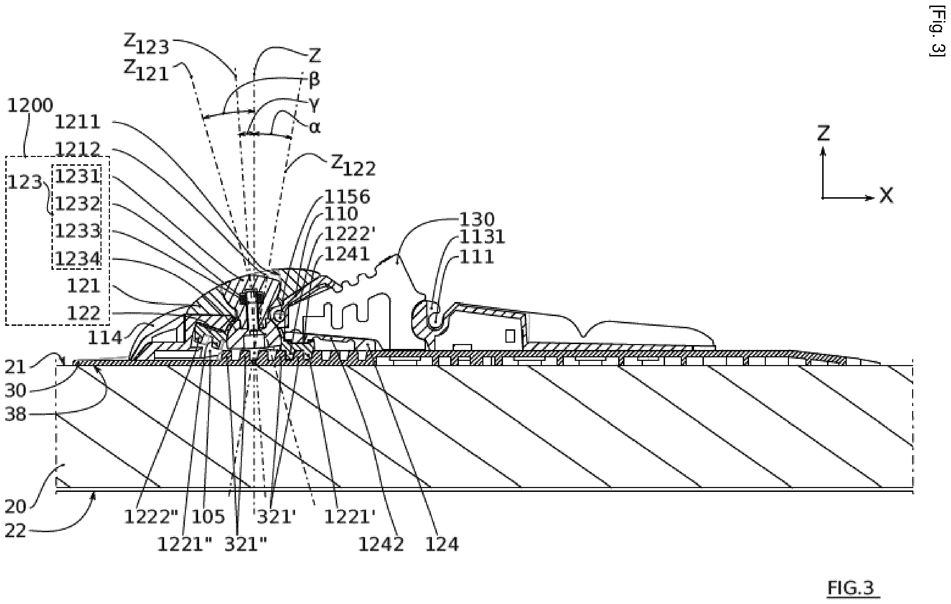

Cette construction permet d'avoir, pour certaines positions angulaires de la portion de coopération 122, les deux reliefs 1221, 1222 qui coopèrent simultanément avec plusieurs reliefs complémentaires 321 de la crémaillère 32. Cette configuration est illustrée en figure 3. Sur cette figure, en effet les portions de spirale 1221', 1222' sont simultanément en prise avec les reliefs complémentaires 321'. Cela permet une meilleure transmission des efforts selon une direction longitudinale X, entre la fixation et la planche de glisse, notamment lors des phases de propulsion du skieur.

Ainsi chacun des deux reliefs 1221, 1222 ne s'étende pas nécessairement sur une grande longueur. Typiquement, chaque relief 1221, 1222, dans cet exemple chaque portion de spirale, s'étend sur un secteur angulaire inférieur à 360° et de préférence inférieur à 180°. Cela permet de limiter considérablement l'extension radiale de la portion de coopération 122. Si cette dernière présente une forme de disque, alors, la présence d'au moins deux portions de spirale permet de réduire son diamètre.

Ainsi, un mode de réalisation avec plusieurs reliefs 1221, 1222, typiquement plusieurs portions de spirales plus courtes, s'étendant sur un angle inférieur à 360°, est plus avantageux qu'un mode de réalisation qui ne comporterait qu'un seul relief 1221, 1222, typiquement qu'une seule spirale, s'étendant sur une portion supérieure à 360°. En effet, dans un tel mode de réalisation, la portion de coopération 122 présenterait un diamètre nécessairement plus grand. Le mode de réalisation avec plusieurs portions de spirales permet ainsi de rendre le mécanisme de réglage 120 plus compact en réduisant sensiblement son encombrement. Cela permet ainsi de mieux intégrer la fixation sur la planche de glisse 20 et notamment de concevoir un châssis 100 relativement étroit dont la largeur est inférieure à la largeur de la planche de glisse 20. Ainsi, avec des skis étroits, le dispositif de retenue 10, également désigné fixation, ne déborde peu ou pas des bords latéraux du ski. On évite ainsi des risques de contact ou de blessure avec le châssis 100, de gêne dans les mouvements du skieur ou encore d'abîmer le châssis 100. Cela permet donc d'accroître la robustesse de la fixation et donc sa fiabilité. En étant plus compact, cela permet aussi de reculer le centre de gravité de la fixation vers l'arrière ce qui contribue à un meilleur équilibre du ski.

De préférence l'organe de réglage 1200 est configuré de sorte que la portion de coopération 122 peut être positionnée angulairement, autour dudit axe z122, selon au moins deux configurations parmi lesquelles : une configuration de glisse pour laquelle les au moins deux reliefs 1221, 1222 sont aptes à être simultanément en prise avec la crémaillère 32 et une configuration de réglage transitoire pour laquelle seulement l'un des reliefs est apte à être en prise avec la crémaillère 32.

Autrement dit, la configuration de glisse correspond à la configuration pour laquelle au moins le premier et le deuxième reliefs 1221, 1222 sont aptes à être simultanément en prise avec au moins l'un des reliefs complémentaires 321 de la crémaillère 32 et la configuration de réglage transitoire correspond à la configuration pour laquelle seulement certains et de préférence l'un seulement parmi les au moins deux reliefs 1221, 1222 sont aptes à être en prise avec au moins l'un des reliefs complémentaire 321 de la crémaillère 32.

Cette caractéristique permet de renforcer la robustesse en configuration de glisse puisque deux reliefs sont en prise dans cette configuration, tout en limitant l'encombrement du mécanisme de réglage 120, du fait qu'un seul relief est en prise avec la crémaillère 32 dans cette configuration de réglage transitoire. L'encombrement du mécanisme de réglage 120 est encore réduite et l'équilibrage de la planche de glisse 20 en est encore amélioré. De plus, cela permet aussi d'optimiser le poids de la fixation. En effet, on dimensionne le relief pour que, uniquement dans les configurations de glisse, on a suffisamment de matière, avec deux reliefs en prise, pour transmettre les efforts longitudinaux. Ainsi, pour les phases transitoires de réglage pour lesquelles il n'y a pas besoin de transmission d'effort, on diminue le nombre de reliefs en prise, avec un seul relief en prise. On minimise alors la matière, ce qui permet un gain de poids de l'engin de glisse.

La figure 7 illustre un exemple dans lequel chaque relief 1221, 1222, typiquement chaque spirale ou portion de spirale, s'étend sur environ un secteur angulaire compris entre 200° et 240°. Les deux reliefs 1221, 1222 sont agencés de sorte à présenter deux zones de chevauchement A, correspondant chacune à un secteur angulaire dans lequel un rayon partant du centre 1220 rencontre chacun des reliefs 1221, 1222. Ces deux zones de chevauchement A sont disposées symétriquement de part et d'autre du centre 1220. Les autres secteurs angulaires correspondent à des zones de non chevauchement B, illustrées en figure 7.

Ainsi, selon une première position angulaire de l'organe de commande 121, correspondant à la configuration de glisse, la portion de coopération 122 est angulairement positionnée de sorte à mettre en prise les ou l'une des zones de chevauchement A avec la crémaillère 32. Il s'ensuit que les deux reliefs 1221, 1222 sont alors en prise avec des reliefs complémentaires 321 de la crémaillère 32.

Selon d'autres positions angulaires de l'organe de commande 121, correspondant à la configuration de réglage transitoire, la portion de coopération 122 est angulairement positionnée de sorte à mettre en prise une zone de non chevauchement B avec la crémaillère 32. Il s'ensuit que seul l'un des deux reliefs 1221, 1222 est alors en prise avec des reliefs complémentaires 321 de la crémaillère 32.

De préférence, le mécanisme de réglage comprend un dispositif d'indexation configuré pour maintenir l'organe de commande 121 dans une position d'équilibre stable lorsque ce dernier est en configuration de glisse. Ainsi, on évite une activation involontaire de l'organe de commande 121 lorsque celui-ci est dans la configuration de glisse. De préférence, le dispositif d'indexation est configuré pour que l'organe de commande 121 soit dans une position d'équilibre instable en configuration de réglage transitoire.

Selon un mode de réalisation, le dispositif d'indexation peut comprendre un moyen élastique permettant de ramener l'organe de commande 121 vers une position stable. Ainsi, l'organe de commande 121 a tendance à revenir automatiquement dans la configuration de glisse en cas de manipulation involontaire de ce dernier ou si l'utilisateur oublie de le ramener en configuration de glisse.

Le dispositif d'indexation permet également de rendre plus sûr, intuitif, rapide et aisé le réglage la position longitudinale de la chaussure. Cela conduit à raccourcir le temps de réglage et donc à améliorer les performances du skieur.

Le dispositif d'indexation comprend un premier élément d'indexation porté par l'organe de réglage 1200 ainsi qu'un élément d'indexation complémentaire solidaire du châssis 100. Alternativement, l'élément d'indexation complémentaire peut être solidaire de la planche de glisse 20. Selon un mode de réalisation, il peut aussi être supporté par une pièce intermédiaire, telle qu'une plaque d'interface 30, fixée sur la planche de glisse 20.

Dans l'exemple illustré, le premier élément d'indexation est une zone en relief, par exemple un creux 1227, porté par une face supérieure 1225 de la portion de coopération 122, cette face supérieure 1225 étant une face opposée à la face inférieure 1226 portant les reliefs 1221, 1222. De préférence, la portion de coopération 122 comprend un premier élément d'indexation pour chacun des secteurs angulaires correspondant à une configuration de glisse. Dans l'exemple illustré, la portion de coopération 122 présente une zone en relief, ici un creux 1227, au droit de chacune des zones de chevauchement 1223.

L'élément d'indexation complémentaire est par exemple porté par une face du châssis en regard de la portion de coopération 122 et qui présente un relief complémentaire, par exemple un relief en saillie 1241. Ce relief complémentaire en saillie est par exemple porté par une languette élastique 1242. Comme cela paraît en figure 2 et en figure 3, le relief complémentaire est formé par une pièce d'indexation 124 portée par ou solidaire du châssis 100.

De préférence, le châssis 100 forme un logement 105 débouchant sur sa face inférieure 103. Une fois assemblée au châssis, la portion de coopération 122 est située à l'intérieur de ce logement 105 de sorte à être confinée à l'intérieur du châssis 100 tout en pouvant coopérer avec la crémaillère 32 située en regard de la face inférieure 103 du châssis 100. Ainsi, la portion de coopération 122 portant les reliefs 1221, 1222, est protégée par le châssis 100. Cela permet de protéger la portion de coopération 122 des intempéries telles que l'accumulation de neige ou le gel qui pourrait bloquer sa coopération avec la crémaillère 32 et de la prémunir des chocs. La fiabilité du mécanisme de réglage 120 en est ainsi renforcée.

Le châssis 100 présente également une partie supérieure 102. L'organe de commande 121 est positionné au-dessus de la partie supérieure 102 de sorte à être accessible de préférence manuellement, par l'utilisateur.

De manière avantageuse, la portion de coopération 122 est dimensionnée et agencée de sorte que lorsqu'une première portion d'une spirale est apte à être en prise avec la crémaillère 32, une deuxième portion de cette même spirale, disposée en opposition par rapport à l'axe de rotation z122, n'est plus apte à coopérer avec la crémaillère 32.

Autrement dit, la portion de coopération 122 est dimensionnée et agencée de sorte que lorsqu'une première portion du premier relief 1221 est apte à être en prise avec au moins un relief complémentaire 321 de la crémaillère 32, une deuxième portion du premier relief 1221, symétriquement disposée par rapport audit axe de rotation z122, n'est plus apte à coopérer avec un des reliefs complémentaires 321 de la crémaillère 32.

Cette caractéristique permet d'améliorer la fiabilité du fonctionnement du mécanisme et d'éviter les risques de coincement. En effet, les deux portions étant en opposition, il y a un fort risque de bloquer le mécanisme si elles sont en prise simultanément. Cela permet aussi d'optimiser la forme des reliefs complémentaires pour le rendre plus robuste et assurer une meilleure reprise des efforts longitudinaux.

À cet effet, et comme cela est illustré en figure 3, on peut par exemple prévoir que la face inférieure 1226 de la portion de coopération 122 soit sensiblement évasée, inclinée ou conique. En s'éloignant du centre 1220, la face inférieure des reliefs 1221, 1222 tend à remonter en s'éloignant de la crémaillère 32. Sur cette figure, les portions 1221' et 1222' des reliefs 1221, 1222 sont en prise avec les reliefs complémentaires 321' de la crémaillère 32 tandis que les portions 1221" et 1222", symétriques des portions 1221' et 1222' par rapport à l'axe z122, ne sont pas en prise avec les reliefs complémentaires 321" au droit desquelles elles sont pourtant positionnées.

De manière avantageuse, le mécanisme de réglage 120 est conformé de sorte que les reliefs complémentaires 321' qui sont en prise, soient situés entre l'axe z122 et le mécanisme de maintien 110. Cela permet de réduire la longueur de la plaque d'interface 30, celle-ci étant principalement liée à la position de la crémaillère 32. Avec cette construction, les reliefs 1221, 1222 de la portion de coopération 122 peuvent rapidement être en prise avec les reliefs complémentaires 321 de la crémaillère 32 lors de l'assemblage du châssis 100 avec la plaque d'interface 30. Cela permet de raccourcir la longueur de la plaque d'interface 30 en la rendant plus compacte et plus légère. De plus, cette construction favorise la compacité du dispositif de retenue 10, typiquement une fixation de ski. Cela permet aussi de reculer le centre de gravité de la planche de glisse 20 équipée de la plaque d'interface 30 et de la fixation vers l'arrière ce qui contribue à un meilleur équilibre du ski.

Selon un mode de réalisation, les reliefs complémentaires 321 portés par la crémaillère 32 présentent une forme asymétrique par rapport à l'axe longitudinal X de la plaque d'interface 30. Selon un mode de réalisation, les reliefs complémentaires 321 présentent un contour formé de deux trajectoires courbes qui se rejoignent à leurs extrémités. Ces trajectoires courbes forment chacune des surfaces de contact Y1, Y2 complémentaires aux flancs latéraux des reliefs 1221, 1222 de la portion de coopération 122.

Chaque surface de contact Y1, Y2 des reliefs complémentaires 321 portés par la crémaillère 32 s'étende respectivement selon une trajectoire courbe conformée de sorte que la distance entre un point de l'une de ces trajectoires et un axe de rotation vertical (Z) passant par un point de l'axe longitudinal de la plaque d'interface 30 ou de l'engin de glisse, varie progressivement lorsque l'on parcourt une partie de la trajectoire courbe. Les surfaces de contact Y1, Y2 peuvent aussi former chacune une portion de spirale.

Selon un mode de réalisation, chaque surface de contact Y1, Y2 est dimensionnée de sorte à se conformer sensiblement au flanc latéral X1, X2 du relief 1221, 1222 destiné à être en regard de la surface de contact Y1, Y2, en particulier lorsque on tourne la portion de coopération 122.

Selon un exemple de réalisation, comme celui illustré en figure 8, la crémaillère 32 peut être centrée par rapport à l'axe longitudinal 37 de la plaque d'interface, cet axe longitudinal 37 étant lui-même centré par rapport à l'axe longitudinal 34 de la planche de glisse 20, typiquement un ski.

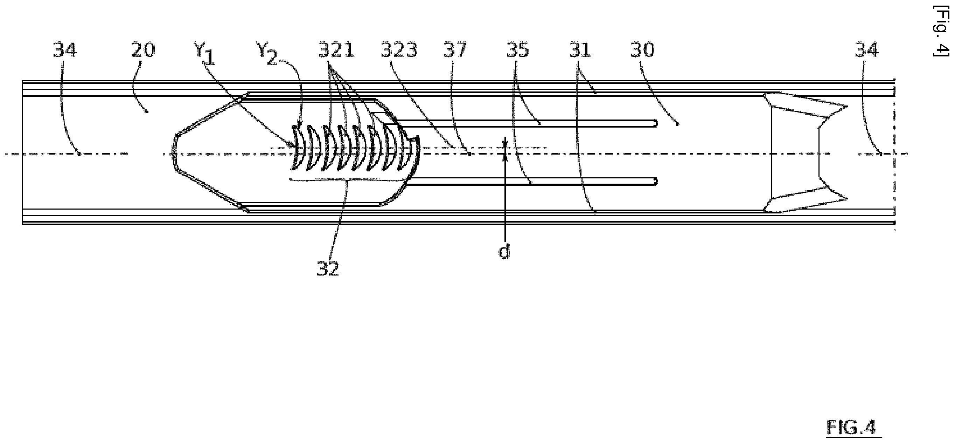

Selon un autre exemple de réalisation, la crémaillère 32 peut être décentrée par rapport à l'axe longitudinal 37 de la plaque d'interface. Cela permet d'avoir davantage de surface de contact pour reprendre les efforts longitudinaux ce qui permet de réduire les effets de matage. Pour réaliser ce mode de réalisation, on peut par exemple prévoir que les reliefs complémentaires 321 soient alignés le long d'un axe 323 décalé transversalement, c'est-à-dire selon la direction Y, par rapport à l'axe longitudinal 37 selon laquelle la plaque d'interface 30 s'étend principalement. Ce mode de réalisation est illustré en figure 4, ce décalage étant noté d sur cette figure.

Plusieurs formes de reliefs complémentaires 321 sont envisageables. Des exemples non limitatifs de reliefs complémentaires 321 sont illustrés en figures 8 à 10.

La figure 8 illustre le mode de réalisation des figures 2, 3, 4, et 5 dans lequel chaque relief complémentaire 321 présente des surfaces de contact Y1, Y2, ici au nombre de deux, courbes et dont les extrémités se rejoignent. Ainsi chaque relief complémentaire 321 présente une forme de demi-lune ou de portion de lune. Sur cette figure 8, la portion complémentaire 122 porte deux reliefs 1221, 1222. Le flanc latéral X1 de chaque relief 1221, 1222 est au contact ou en regard de la surface de contact Y1 d'un relief complémentaire 321. Par exemple, le flanc latéral X1 du relief 1221 est au contact ou en regard de la surface de contact Y1 du relief complémentaire 321c. Le flanc latéral X2 de chaque relief 1221, 1222 est au contact ou en regard de la surface de contact Y2 d'un relief complémentaire 321. Par exemple, le flanc latéral X2 du relief 1221 est au contact ou en regard de la surface de contact Y2 du relief complémentaire 321b.

La figure 9 illustre un mode de réalisation qui diffère de celui de la figure 8 en ce que les reliefs complémentaires 321 sont tronqués de sorte que ces reliefs complémentaires sont centrés en largeur par rapport à la largeur de la plaque d'interface 30 ou à la planche de glisse. Ainsi, les reliefs complémentaires 321 présentent à l'une de leurs extrémités, c'est-à-dire à la jonction entre les deux surfaces de contact Y1, Y2, une portion plane 3211. Cette portion plane 3211 s'étend sensiblement dans un plan parallèle à l'axe longitudinal 37 de la plaque d'interface 30 ou à l'axe longitudinal 34 de la planche de glisse 20. Cela permet une répartition de l'effort de reprise d'effort longitudinal centrée.

Tous les modes de réalisation mentionnés ci-dessus et décrivant des variantes de reliefs complémentaires 321 de crémaillères 32 s'appliquent aussi bien à des crémaillères 32 formées par la planche de glisse 20 qu'à des crémaillères 32 portées par une plaque d'interface 30.

La figure 10 illustre un mode de réalisation dans lequel les reliefs complémentaires 321 forment chacun un plot. Ainsi, comme illustré en figure 10, les reliefs complémentaires 321 forment une succession de plots alignés sur l'axe longitudinal 37 de la plaque d'interface 30. Les flancs X1 et X2 des reliefs 1221, 1222 viennent glisser sur ces plots. Ce mode de réalisation permet de réduire le risque de blocage du mécanisme de réglage 120, notamment dans le cas où les portions de reliefs, positionnées en opposition par rapport à l'axe z122, sont conçues pour être en prise avec la crémaillère. Afin de renforcer la robustesse du contact entre les reliefs 1221, 1222 et les reliefs complémentaires 321 on peut prévoir de former ces derniers dans un matériau particulièrement résistant et/ou à faible coefficient de frottement. On pourra par exemple prévoir un plot métallique ou des revêtements adaptés.

La figure 11 illustre un mode de réalisation alternatif pour la portion complémentaire 122. Dans ce mode de réalisation, la portion complémentaire 122 porte quatre reliefs 1221, 1222, 1223, 1224. Chacun de ces reliefs 1221, 1222, 1223, 1224 présente un flanc X2 tourné vers le centre z122 de la portion complémentaire 122 et un flanc X1 tourné vers l'extérieur de la portion complémentaire 122.

Augmenter le nombre de reliefs portés par la portion complémentaire 122 permet d'avoir un plus grand nombre de reliefs en prise avec les reliefs complémentaires 321 solidaires de la planche de glisse 20. Avec l'exemple illustré en figure 11, dans certaines phases d'utilisation, les quatre reliefs 1221, 1222, 1223, 1224 peuvent être simultanément en prise avec la crémaillère 32. La transmission des efforts entre le châssis 100 et la crémaillère 32 s'effectue alors sur une surface plus importante. A transmission d'effort constant, il est alors possible de réduire l'épaisseur des reliefs de la portion complémentaire 122. Il est alors possible d'augmenter le pas de ces reliefs c'est-à-dire la longueur du déplacement longitudinal du châssis 100 parcourue pour un angle donné de rotation de la portion complémentaire 122, ceci sans pénaliser trop fortement l'encombrement. Cela permet d'avoir un déplacement plus rapide du dispositif de retenue. En effet, en effectuant une rotation de l'organe de commande 121 selon un angle donné le châssis 100 se déplacera sur une longueur de course plus importante. Typiquement, on peut prévoir que le châssis se déplace longitudinalement d'une distance comprise entre cinq et dix millimètres par demi-tour de l'organe de commande 121.

Sur l'exemple illustré en figure 11, la portion complémentaire 122 comporte quatre reliefs. On peut naturellement envisager d'autres nombres de reliefs tels que trois ou un nombre supérieur à quatre.

Comme pour les rails de retenue du châssis 100, la crémaillère 32 peut être soit formée sur une face supérieure 21 de la planche glisse, soit être portée par une plaque d'interface 30 rapportée sur la planche de glisse 20. Dans ce deuxième cas, la crémaillère 32 peut former avec la plaque d'interface 30 une pièce monolithique. Alternativement, la crémaillère 32 peut-être un insert rapporté sur la plaque d'interface 30 ou sur la planche de glisse. Dans ce dernier cas, cela permet l'utilisation d'un insert réalisé avec un matériau plus robuste pour la transmission des efforts longitudinaux tout en utilisant un corps de plaque d'interface ou du ski réalisé dans un matériau plus économique.

Ces constructions présentent pour avantage d'offrir une grande polyvalence à l'utilisateur puisqu'il peut utiliser ses différentes paires de planches de glisse 20 avec un unique dispositif de retenue 10.

L'utilisation d'une plaque d'interface 30 présente l'avantage de pouvoir s'adapter à n'importe quelle planche de glisse du marché. Cette solution permet donc une grande polyvalence en ce qui concerne la compatibilité avec la planche de glisse qui convient le mieux à l'utilisateur. De manière préférée, la plaque d'interface 30 est une pièce relativement simple et peu coûteuse puisqu'il suffit qu'elle porte soit la crémaillère, soit les rails de guidage et de retenue, soit ces deux éléments. Typiquement la plaque d'interface 30 peut être réalisée principalement ou entièrement de plastique.

Un exemple de dispositif 123 permettant la transmission du mouvement entre l'organe de commande 121 et la portion de coopération 122 va maintenant être décrit.

Comme illustré en figure 3, l'organe de commande 121 est monté en rotation autour d'un axe z121 sur le châssis 100, de préférence sur la partie supérieure 102 du châssis 100. De préférence, cet axe z121 est compris dans un plan parallèle au plan ZX tout en étant inclinés d'un angle β par rapport à l'axe Z. Par ailleurs, l'axe z121 est de préférence incliné d'un angle β' compris entre 30° et 90° par rapport au plan principal XY, avec β'= 90- β. De préférence β est différent de α.

Avantageusement, l'axe z121 est incliné d'un angle β' compris entre 45° et 75° par rapport au plan principal XY. Cette construction améliore sensiblement l'ergonomie de manipulation de l'organe de commande.

L'organe de commande 121 forme une liaison pivot ou une liaison rotule à doigt avec le dispositif 123 de transformation de mouvement. Cette liaison permet une rotation relative de ces deux pièces autour d'un axe transverse Y à la direction longitudinale X du châssis 100. Le dispositif 123 de transformation de mouvement présente une première extrémité 1231 qui coopère avec l'organe de commande 121 pour former cette liaison. L'organe de commande 121 et l'extrémité 1231 présentent des reliefs complémentaires pour que la rotation de l'organe de commande 121 autour de l'axe z121 entraîne en rotation le dispositif 123 autour de son axe de rotation z123. Cet axe z123 est incliné d'un angle γ par rapport à l'axe Z. Par ailleurs, l'axe z123 est incliné d'un angle γ' de préférence compris entre 30° et 90° par rapport au plan principal XY, avec γ'= 90- γ. De préférence, γ, β et α sont différents.

Ainsi, le dispositif 123 de transformation de mouvement fait office de joint de cardan pour transmettre la rotation de l'organe de commande 121 jusqu'à la portion de coopération 122.

Plus en détail, l'organe de commande 121 présente un logement 1211 définissant une paroi 1212 en creux. L'extrémité 1231 du dispositif 123 de transmission de mouvement présente une portion complémentaire de la paroi 1212, pour s'insérer dans cette dernière, tout en empêchant une rotation relative de l'organe de commande 121 et de l'extrémité 1231 autour des axes z121 et z123.

Cette extrémité 1231 est fixée à une pièce d'entraînement 1234 configurée pour entraîner la portion de coopération 122. L'extrémité 1231 comporte des reliefs d'entraînement 12311 conformés pour entraîner en rotation des reliefs d'entraînement complémentaires formés dans un logement de la pièce d'entraînement 1234. Typiquement, les reliefs d'entraînement 12311 sont des ergots conformés pour s'insérer dans des logements 12341 formés de la pièce d'entraînement 1234. De préférence, une vis 1233 dont une tête prend appui sur une face inférieure de la pièce d'entraînement 1234, traverse cette dernière et coopère avec un écrou 1232 inséré dans un logement de la première extrémité 1231. La première extrémité 1231 est ainsi rendue entièrement solidaire de la pièce d'entraînement 1234.

Cette dernière présente une paroi externe sphérique 12343 complémentaire d'une paroi sphérique en creux formant un logement 1228 dans la face inférieure 1226 de la portion de coopération 122. Ce logement 1228 de la portion de coopération 122 et la pièce d'entraînement 1234 présentent des reliefs complémentaires 1229, 12342 permettant de coupler ces deux pièces en rotation autour des axes z122 et z123, tout en autorisant une rotation autour de l'axe transverse Y à la direction longitudinale X du châssis 100. De préférence la liaison cinématique entre la portion de coopération 122 et la pièce d'entraînement 1234 forme une rotule à doigt.

Cette structure de l'organe de commande 121, de la portion de coopération 122 et du dispositif 123 de transmission de mouvement permet de rendre le mécanisme de réglage 120 particulièrement compact en s'intégrant au plus près de la chaussure tout en permettant à l'utilisateur de manipuler de manière aisée et précise l'organe de commande 121. Cette compacité permet de reculer le centre de gravité de la fixation vers l'arrière ce qui contribue à un meilleur équilibre du ski.

Selon un mode de réalisation, le dispositif 123 de transmission de mouvement est construit de sorte que les axes z121, z122 et z123 soient alignés.

Comme indiqué précédemment, l'organe d'actionnement 114 du mécanisme de maintien 110 forme un levier articulé en rotation sur le châssis 100 et manipulable par l'utilisateur pour faire passer sélectivement le mécanisme de maintien 110 de la configuration de rétention à la configuration de libération. Ce levier définit un contour, de préférence un contour fermé. Ce contour est par exemple défini par des branches 1141 s'étendant principalement longitudinalement et qui se rejoignent par une traverse 1142. L'intérieur du contour définit une ouverture 1143. L'organe de commande 121 est dimensionné et agencé de sorte à être situé sensiblement au-dessus du levier lorsque celui-ci est dans la configuration de rétention. Ainsi, dans la configuration de rétention, l'organe de commande 121 n'interfère pas avec le levier. L'utilisateur peut alors librement manipuler l'organe de commande 121 afin de régler la position longitudinale du mécanisme de maintien 110, lorsque la chaussure est en prise avec la fixation.

Selon un mode de réalisation, le levier de l'organe d'actionnement 114 et l'organe de commande 121 sont conformés de sorte que lorsque ce dernier est dans la configuration de glisse, il passe au travers du contour défini par le levier pour autoriser le passage alternatif du levier entre les configurations de rétention et de libération. En revanche, lorsque l'organe de commande 121 est dans la configuration de réglage transitoire il interfère avec le contour et bloque le passage alternatif du levier entre les configurations de rétention et de libération. Typiquement, l'organe de commande 121 présente une dimension transversale T1, prise selon la direction Y, lorsqu'il est en configuration de glisse et il présente une dimension transversale T2, prise selon cette même direction Y, lorsqu'il est en configuration de réglage transitoire. T1 est inférieure à T2. Par ailleurs, la dimension transversale, prise selon la direction Y, de l'ouverture 1143 est supérieure à T1 et est inférieure à T2.

Ceci permet de régler la position longitudinale de la chaussure lorsque cette dernière est accrochée sur la planche de glisse, sans risque que cette manipulation entraîne de manière involontaire un mouvement du levier et provoque la libération de la chaussure. En pratique, cela représente un avantage considérable en termes de rapidité et de sécurité du réglage. L'utilisateur peut ainsi exécuter un réglage longitudinal de manière très rapide, voire alors qu'il est toujours en phase de glisse à vitesse mesurée. Cela permet donc d'améliorer significativement les performances sportives de l'utilisateur. Cela permet aussi à l'utilisateur d'être plus sûr que l'actionnement du mécanisme de maintien 110 est réalisé pour une position du châssis 100 stable, configuration de glisse pour laquelle la coopération entre les reliefs 1221, 1222 et les reliefs complémentaires 321 est optimale pour la reprise des efforts longitudinaux. On améliore ainsi la fiabilité d'utilisation de la fixation.

Ce mode de réalisation permet également de protéger le mécanisme de réglage contre les chocs. Selon un exemple de réalisation, le dispositif de retenue 10 peut comprendre une ou deux butées pour limiter le déplacement longitudinal du châssis 100.

Selon un exemple de réalisation, le dispositif peut comprendre un ou plusieurs indicateurs visuels, tels que des curseurs ou des graduations, permettant d'indiquer à l'utilisateur la position de la fixation, plus précisément la position longitudinale du châssis 100, par rapport à un repère associé à la planche de glisse 20. La graduation peut être située sur la plaque d'interface 30 ou directement sur la planche de glisse 20. Cela permet à l'utilisateur de régler plus facilement la position longitudinale de sa chaussure.

L'organe de réglage 1200 est porté par le châssis 100. Le châssis 100 peut être une pièce unitaire monobloc. Alternativement, le châssis 100 peut être un assemblage de plusieurs pièces ou corps distincts fixés les uns aux autres sans degré de liberté.

L'invention n'est pas limitée aux modes de réalisations précédemment décrits. Il est possible de combiner ces modes de réalisation. L'invention s'étend à tous les modes de réalisation couverts par les revendications.

Par exemple, on peut prévoir qu'une plaque d'interface 30 soit rapportée sur la planche de glisse 20 et que cette plaque d'interface 30 comporte l'un seulement ou plusieurs des éléments suivants :
- un ou des rails principaux 31,
- un ou des rails complémentaires 35,
- une ou plusieurs crémaillères 32.

En effet, dans l'exemple décrit ci-dessus et illustré sur les figures, la plaque d'interface 30 présente tous ces éléments. Pour autant, elle peut n'en porter que l'un ou certains d'entre eux. En particulier, la plaque d'interface 30 peut assurer les fonctions de guidage et de retenue du châssis 100 sans pour autant porter la crémaillère 32. Inversement, la plaque interface 30 peut porter la crémaillère sans pour autant assurer les fonctions de guidage et de retenue du châssis 100.

## Revendications

1. Dispositif de retenue (10) d'une chaussure sur une planche de glisse (20), le dispositif de retenue (10) comprenant :
- un châssis (100) configuré pour coopérer avec un élément complémentaire de retenue formé par une plaque d'interface (30) solidaire de la planche de glisse (20) ou avec un élément complémentaire de retenue portant des rails (31) de guidage et de retenue formés directement par la planche de glisse (20) de manière à pouvoir coulisser longitudinalement par rapport à la planche de glisse (20), le châssis (100) présentant une face inférieure (103), destinée à être tournée au regard de la planche de glisse (20) et s'étendant principalement selon un plan, dit plan principal (XY),
- un mécanisme de maintien (110) configuré pour coopérer avec un élément d'accrochage appartenant à la chaussure de sorte que la chaussure soit maintenue en position par rapport au châssis, le mécanisme de maintien (110) étant porté par le châssis (100),
- un organe de réglage (1200) configuré pour coopérer avec une crémaillère (32) solidaire de la planche de glisse (20) de sorte que l'actionnement de l'organe de réglage (1200) entraîne le coulissement longitudinal du châssis (100) par rapport à la planche de glisse (20), l'organe de réglage (1200) comprenant une portion de coopération (122) montée en rotation autour d'un axe de rotation (z122), la portion de coopération (122) comprenant une face inférieure (1226) portant au moins un premier relief (1221) présentant deux flancs latéraux (X1, X2) s'étendant respectivement selon une trajectoire courbe conformée de sorte que la distance entre un point de l'une de ces trajectoires et ledit axe de rotation (z122) varie progressivement tout le long d'au moins une partie de la trajectoire courbe, le premier relief (1221) étant configuré de sorte que ses flancs latéraux (X1, X2) soient aptes à coopérer avec des surfaces de contact (Y1, Y2) de reliefs complémentaires (321) de la crémaillère (32) de manière à entraîner le coulissement longitudinal du châssis (100) par rapport à la planche de glisse (20) sous l'effet de la rotation de la portion de coopération (122) autour dudit axe de rotation (z122), **caractérisé en ce que** l'organe de réglage (1200) est porté par le châssis (100) et que l'axe de rotation (z122) est inclinée d'un angle (alpha) compris entre 30° et 90° par rapport audit plan principal (XY) dans lequel s'étend principalement la face inférieure (103) du châssis (100).

2. Dispositif de retenue (10) selon la revendication précédente, dans lequel la portion de coopération (122) comprend au moins un deuxième relief (1222) présentant deux flancs latéraux (X1, X2) s'étendant respectivement selon une trajectoire courbe conformée de sorte que la distance entre un point de l'une des trajectoires des flancs latéraux (X1, X2) du deuxième relief (1222) et ledit axe de rotation (z122) varie progressivement tout le long d'au moins une partie de cette trajectoire courbe, les deux flancs latéraux du deuxième relief (1222) étant décalés angulairement par rapport aux flancs latéraux du premier relief (1221).

3. Dispositif de retenue (10) selon la revendication précédente dans lequel, l'organe de réglage (1200) est configuré de sorte que la portion de coopération (122) peut être positionnée angulairement, autour dudit axe de rotation (z122), selon au moins deux configurations parmi lesquelles: une configuration de glisse pour laquelle au moins le premier et le deuxième reliefs (1221, 1222) sont aptes à être simultanément en prise avec au moins l'un des reliefs complémentaires (321) de la crémaillère (32) et une configuration de réglage transitoire pour laquelle seulement certains et de préférence l'un seulement parmi les au moins deux reliefs (1221, 1222) sont aptes à être en prise avec au moins l'un des reliefs complémentaire (321) de la crémaillère (32).

4. Dispositif de retenue (10) selon l'une quelconque des revendications précédentes, dans lequel l'organe de réglage (1200) comprend au moins un élément d'indexation apte à coopérer avec un élément d'indexation complémentaire solidaire du châssis (100) de manière à maintenir la portion de coopération (122) dans au moins une position angulaire stable.

5. Dispositif de retenue (10) selon l'une quelconque des revendications précédentes, dans lequel la portion de coopération (122) est dimensionnée et agencée de sorte que lorsqu'une première portion du premier relief (1221) est apte à être en prise avec au moins un relief complémentaire (321) de la crémaillère (32), une deuxième portion du premier relief (1221), symétriquement disposé par rapport audit axe de rotation (z122), n'est plus apte à coopérer avec un des reliefs complémentaires (321) de la crémaillère (32).

6. Dispositif de retenue (10) selon l'une quelconque des revendications précédentes, dans lequel le châssis (100) présente :
- un logement inférieur (105) destiné à être tourné au regard de la crémaillère (32), la portion de coopération (122) étant logée dans ledit logement inférieur (105),
- une partie supérieure (102),
et dans lequel le dispositif de retenue comprend un organe de commande (121) configuré pour être manipulé par l'utilisateur afin d'entraîner en rotation la portion de coopération (122) autour de l'axe de rotation (z122), l'organe de commande (121) étant positionné au-dessus de la partie supérieure (102) du châssis (100) pour être accessible manuellement par l'utilisateur.

7. Dispositif de retenue (10) selon l'une quelconque des revendications précédentes, dans lequel l'axe de rotation (z122) est inclus dans un plan longitudinal médian (ZX) du châssis (100).

8. Dispositif de retenue (10) selon l'une quelconque des revendications précédentes, dans lequel la portion de spirale du premier relief (1221) au moins s'étend selon un angle supérieur à 180°.

9. Dispositif de retenue (10) selon l'une quelconque des revendications précédentes, dans lequel la portion de spirale du premier relief (1221) au moins s'étend selon un angle inférieur à 360°.

10. Dispositif de retenue (10) selon l'une quelconque des revendications précédentes, dans lequel la face inférieure (1226) de la portion de coopération (122) est conique.

11. Kit comprenant un dispositif de retenue (10) et une plaque d'interface (30) apte à se fixer sur une planche de glisse (20), la plaque d'interface comprenant au moins une crémaillère (32) configurée pour coopérer avec un organe de réglage (1200) dudit dispositif de retenue (10),
**caractérisée en ce que**
le dispositif de retenue (10) est un dispositif selon l'une quelconque des revendications précédentes

12. Kit selon la revendication précédente, **caractérisé en ce que** la plaque d'interface (30) comprend des reliefs complémentaires (321) portés par la crémaillère (32), les reliefs complémentaires (321) présentant une forme asymétrique par rapport à l'axe longitudinal (37) de la plaque d'interface.

13. Kit selon l'une quelconque des deux revendications précédentes, **caractérisé en ce que** la plaque d'interface (30) comprend des reliefs complémentaires (321) portés par la crémaillère (32), les reliefs complémentaires (321) comprenant au moins une surface de contact (Y1, Y2) courbe.

14. Planche de glisse (20) équipée d'un dispositif de retenue (10) selon l'une quelconque des revendications 1 à 10.

## Patentansprüche

1. Vorrichtung (10) zum Halten eines Schuhs auf einem Gleitbrett (20), wobei die Haltevorrichtung (10) Folgendes umfasst:
- ein Gestell (100), das konfiguriert ist zum Zusammenwirken mit einem komplementären Halteelement, das durch eine fest mit dem Gleitbrett (20) verbundene Schnittstellenplatte (30) ausgebildet ist, oder mit einem komplementären Halteelement, das Führungs- und Halteschienen (31) trägt, die direkt durch das Gleitbrett (20) ausgebildet ist, sodass es in Längsrichtung in Bezug auf das Gleitbrett (20) gleiten kann, wobei das Gestell (100) eine Unterseite (103) aufweist, die dazu bestimmt ist, gegenüber dem Gleitbrett (20) gedreht zu werden, und sich im Wesentlichen entlang einer als Hauptebene (XY) bezeichneten Ebene erstreckt,
- einen Haltemechanismus (110), der dazu konfiguriert ist, mit einem zum Schuh gehörenden Befestigungselement zusammenzuwirken, sodass der Schuh in Bezug auf das Gestell in Position gehalten wird, wobei der Haltemechanismus (110) durch das Gestell (100) getragen wird,
- ein Einstellorgan (1200), das dazu konfiguriert ist, mit einer Zahnstange (32) zusammenzuwirken, die fest mit dem Gleitbrett (20) verbunden ist, sodass die Betätigung des Einstellorgans (1200) das Gleiten des Gestells (100) in Längsrichtung in Bezug auf das Gleitbrett (20) bewirkt, wobei das Einstellorgan (1200) einen Kooperationsabschnitt (122) umfasst, der um eine Drehachse (z122) drehbar montiert ist, wobei der Kooperationsabschnitt (122) eine Unterseite (1226) umfasst, die mindestens ein erstes Relief (1221) trägt, das zwei Seitenflanken (X1, X2) aufweist, die sich jeweils entlang einer gekrümmten Bahn erstrecken, so dass der Abstand zwischen einem Punkt einer dieser Bahnen und der Drehachse (z122) entlang zumindest eines Teils der gekrümmten Bahn progressiv variiert, wobei das erste Relief (1221) so konfiguriert ist, dass seine Seitenflanken (X1, X2) mit Kontaktflächen (Y1, Y2) komplementärer Reliefs (321) der Zahnstange (32) zusammenwirken können, um ein Gleiten des Gestells (100) in Längsrichtung in Bezug auf das Gleitbrett (20) unter der Wirkung der Drehung des Kooperationsabschnitts (122) um die Drehachse (z122) zu bewirken,
**dadurch gekennzeichnet, dass** das Einstellorgan (1200) durch das Gestell (100) getragen wird und dass die Drehachse (z122) um einen Winkel (alpha) zwischen 30° und 90° in Bezug auf die Hauptebene (XY), in der sich die Unterseite (103) des Gestells (100) im Wesentlichen erstreckt, geneigt ist.

2. Haltevorrichtung (10) nach dem vorangehenden Anspruch, wobei der Kooperationsabschnitt (122) mindestens ein zweites Relief (1222) umfasst, das zwei Seitenflanken (X1, X2) aufweist, die sich jeweils entlang einer gekrümmten Bahn erstrecken, die so geformt ist, dass der Abstand zwischen einem Punkt einer der Bahnen der Seitenflanken (X1, X2) des zweiten Reliefs (1222) und der Drehachse (z122) entlang zumindest eines Teils dieser gekrümmten Bahn progressiv variiert, wobei die beiden Seitenflanken des zweiten Reliefs (1222) in Bezug auf die Seitenflanken des ersten Reliefs (1221) winkelmäßig versetzt sind.

3. Haltevorrichtung (10) nach dem vorangehenden Anspruch, wobei das Einstellorgan (1200) so konfiguriert ist, dass der Kooperationsabschnitt (122) in mindestens zwei Konfigurationen winkelmäßig um die Drehachse (z122) positioniert sein kann, darunter: eine Gleitkonfiguration, bei der zumindest das erste und das zweite Relief (1221, 1222) gleichzeitig mit mindestens einem der komplementären Reliefs (321) der Zahnstange (32) in Eingriff stehen können, und eine Übergangseinstellkonfiguration, bei der nur einige und vorzugsweise nur eines der mindestens zwei Reliefs (1221, 1222) mit mindestens einem der komplementären Reliefs (321) der Zahnstange (32) in Eingriff stehen können.

4. Haltevorrichtung (10) nach einem der vorangehenden Ansprüche, wobei das Einstellorgan (1200) mindestens ein Indexierungselement umfasst, das mit einem komplementären Indexierungselement, das fest mit dem Gestell (100) verbunden ist, zusammenwirken kann, um den Kooperationsabschnitt (122) in mindestens einer stabilen Winkelposition zu halten.

5. Haltevorrichtung (10) nach einem der vorangehenden Ansprüche, wobei der Kooperationsabschnitt (122) so bemessen und angeordnet ist, dass, wenn ein erster Abschnitt des ersten Reliefs (1221) mit mindestens einem komplementären Relief (321) der Zahnstange (32) in Eingriff stehen kann, ein zweiter Abschnitt des ersten Reliefs (1221), der in Bezug auf die Drehachse (z122) symmetrisch angeordnet ist, nicht mehr mit einem der komplementären Reliefs (321) der Zahnstange (32) zusammenwirken kann.

6. Haltevorrichtung (10) nach einem der vorangehenden Ansprüche, wobei das Gestell (100) Folgendes aufweist:
- eine untere Aufnahme (105), die dazu bestimmt ist, gegenüber der Zahnstange (32) gedreht zu werden, wobei der Kooperationsabschnitt (122) in der unteren Aufnahme (105) angeordnet ist,
- einen oberen Teil (102),
und wobei die Haltevorrichtung ein Steuerorgan (121) umfasst, das dazu konfiguriert ist, durch den Benutzer betätigt zu werden, um den Kooperationsabschnitt (122) um die Drehachse (z122) zu drehen, wobei das Steuerorgan (121) über dem oberen Teil (102) des Gestells (100) positioniert ist, um dem Benutzer manuell zugänglich zu sein.

7. Haltevorrichtung (10) nach einem der vorangehenden Ansprüche, wobei die Drehachse (z122) in einer Längsmittelebene (ZX) des Gestells (100) enthalten ist.

8. Haltevorrichtung (10) nach einem der vorangehenden Ansprüche, wobei sich der Spiralabschnitt zumindest des ersten Reliefs (1221) in einem Winkel von mehr als 180° erstreckt.

9. Haltevorrichtung (10) nach einem der vorangehenden Ansprüche, wobei sich der Spiralabschnitt zumindest des ersten Reliefs (1221) in einem Winkel von weniger als 360° erstreckt.

10. Haltevorrichtung (10) nach einem der vorangehenden Ansprüche, wobei die Unterseite (1226) des Kooperationsabschnitts (122) konisch ist.

11. Set, umfassend eine Haltevorrichtung (10) und eine Schnittstellenplatte (30), die dazu ausgelegt ist, an einem Gleitbrett (20) befestigt zu sein, wobei die Schnittstellenplatte mindestens eine Zahnstange (32) umfasst, die dazu konfiguriert ist, mit einem Einstellorgan (1200) der Haltevorrichtung (10) zusammenzuwirken,
**dadurch gekennzeichnet, dass**
die Haltevorrichtung (10) eine Vorrichtung nach einem der vorangehenden Ansprüche ist.

12. Set nach dem vorangehenden Anspruch, **dadurch gekennzeichnet, dass** die Schnittstellenplatte (30) komplementäre Reliefs (321) umfasst, die durch die Zahnstange (32) getragen werden, wobei die komplementären Reliefs (321) eine asymmetrische Form in Bezug auf die Längsachse (37) der Schnittstellenplatte aufweisen.

13. Set nach einem der beiden vorangehenden Ansprüche, **dadurch gekennzeichnet, dass** die Schnittstellenplatte (30) komplementäre Reliefs (321) umfasst, die durch die Zahnstange (32) getragen werden, wobei die komplementären Reliefs (321) mindestens eine gekrümmte Kontaktfläche (Y1, Y2) umfassen.

14. Gleitplatte (20), die mit einer Haltevorrichtung (10) nach einem der Ansprüche 1 bis 10 ausgestattet ist.

## Claims

1. Retaining device (10) for holding a boot on a gliding board (20), the retaining device (10) comprising:
- a chassis (100) configured to cooperate with a complementary retaining element formed by an interface plate (30) that is secured to the gliding board (20) or with a complementary retaining element bearing guiding and retaining rails (31) which are formed directly by the gliding board (20) so as to be able to slide longitudinally relative to the gliding board (20), the chassis (100) having an underside face (103) intended to face towards the gliding board (20) and extending mainly along a plane referred to as main plane (XY),
- a holding mechanism (110) configured to cooperate with a latching element belonging to the boot in order that the boot is held in position relative to the chassis, the holding mechanism (110) being borne by the chassis (100),
- an adjusting member (1200) configured to collaborate with a rack (32) secured to the gliding board (20) such that actuation of the adjusting member (1200) causes the chassis (100) to slide longitudinally with respect to the gliding board (20), the adjusting member (1200) comprising a collaboration portion (122) mounted for rotation about an axis of rotation (z122), the collaboration portion (122) comprising an underside face (1226) bearing at least a first relief (1221) having two lateral flanks (X1, X2) extending respectively in a curved path shaped in such a way that the distance between a point on one of these paths and said axis of rotation (z122) varies progressively all along at least part of the curved path, the first relief (1221) being configured in such a way that the lateral flanks (X1, X2) thereof are able to collaborate with contact surfaces (Y1, Y2) of complementary reliefs (321) of the rack (32) so as to cause the chassis (100) to slide longitudinally with respect to the gliding board (20) under the effect of the rotation of the collaboration portion (122) about said axis of rotation (z122),
**characterized in that** the adjusting member (1200) is borne by the chassis (100) and **in that** the axis of rotation (z122) is inclined by an angle (alpha) of between 30° and 90° with respect to said main plane (XY) in which the underside face (103) of the chassis (100) chiefly extends.

2. Retaining device (10) according to the preceding claim, wherein the collaboration portion (122) comprises at least one second relief (1222) having two lateral flanks (X1, X2) extending respectively in a curved path shaped in such a way that the distance between a point on one of the paths of the lateral flanks (X1, X2) of the second relief (1222) and said axis of rotation (z122) varies progressively all along at least part of this curved path, the two lateral flanks of the second relief (1222) being angularly offset relative to the lateral flanks of the first relief (1221)

3. Retaining device (10) according to the preceding claim, wherein the adjusting member (1200) is configured in such a way that the collaboration portion (122) can be angularly positioned about said axis of rotation (z122) in at least two configurations including: a gliding configuration for which at least the first and the second reliefs (1221, 1222) are able to be simultaneously in engagement with at least one of the complementary reliefs (321) of the rack (32) and a transient adjustment configuration for which only some and preferably only one of the at least two reliefs (1221, 1222) are able to be in engagement with at least one of the complementary reliefs (321) of the rack (32).

4. Retaining device (10) according to any one of the preceding claims, wherein the adjusting member (1200) comprises at least one indexing element able to collaborate with a complementary indexing element that is secured to the chassis (100) so as to hold the collaboration portion (122) in at least one stable angular position.

5. Retaining device (10) according to any one of the preceding claims, wherein the collaboration portion (122) is dimensioned and configured in such a way that when a first portion of the first relief (1221) is able to be engaged with at least one complementary relief (321) of the rack (32), a second portion of the first relief (1221), arranged symmetrically with respect to said axis of rotation (z122) is no longer able to collaborate with one of the complementary reliefs (321) of the rack (32).

6. Retaining device (10) according to any one of the preceding claims, wherein the chassis (100) has:
- a lower housing (105) intended to face toward the rack (32), the collaboration portion (122) being housed in said lower housing (105),
- an upper part (102),
and wherein the retaining device comprises a control member (121) configured to be manipulated by the user so as to cause the collaboration portion (122) to rotate about the axis of rotation (z122), the control member (121) being positioned above the upper part (102) of the chassis (100) so as to be manually accessible to the user.

7. Retaining device (10) according to any one of the preceding claims, wherein the axis of rotation (z122) is included in a longitudinal midplane (ZX) of the chassis (100).

8. Retaining device (10) according to any one of the preceding claims, wherein the spiral portion of the first relief (1221) at least extends over an angle greater than 180°.

9. Retaining device (10) any one of the preceding claims, wherein the spiral portion of the first relief (1221) at least extends over an angle less than 360°.

10. Retaining device (10) according to any one of the preceding claims, wherein the underside face (1226) of the collaboration portion (122) is conical.

11. Kit comprising a retaining device (10) and an interface plate (30) able to be fixed to a gliding board (20), the interface plate comprising at least a rack (32) configured to collaborate with an adjusting member (1200) of said retaining device (10), **characterized in that** the retaining device (10) is a device according to any one of the preceding claims.

12. Kit according to the preceding claim, **characterized in that** the interface plate (30) comprises complementary reliefs (321) borne by the rack (32), the complementary reliefs (321) having a shape that is asymmetrical with respect to the longitudinal axis (37) of the interface plate.

13. Kit according to any one of the two preceding claims, **characterized in that** interface plate (30) comprises complementary reliefs (321) borne by the rack (32), the complementary reliefs (321) comprising at least one curved contact surface (Y1, Y2) .

14. Gliding board (20) equipped with a retaining device (10) according to any one of Claims 1 to 10.
